# EUROPEAN PATENT APPLICATION

(11) **EP 3 892 393 A1**
(43) Date of publication of application: **13.10.2021**
(21) Application number: 21167325.6
(22) Date of filing: 08.04.2021
(51) Int. Cl.: B09B 3/00, B29B 17/00

(54) **METHOD FOR RECYCLING CIGARETTE FILTERS**

(30) Priority: 10.04.2020 IT 202000001126 U; 10.04.2020 IT 202000001180 U; 10.04.2020 IT 202000001582 U
(71) Applicant: Crivellin, Luca, 10072 Mappano, Torino (IT); Brancaccio, Roberta, 10043 Orbassano, (TO) (IT)
(72) Inventor: Crivellin, Luca, 10072 Mappano, Torino (IT); Brancaccio, Roberta, 10043 Orbassano, (TO) (IT)
(74) Representative: Long, Giorgio

(57) **Abstract**

The present invention relates to a method for recycling cigarette filters, comprising the following steps in sequence:
a) Crushing cigarette butts and separating and recovering the cellulosic material of the filters;
b) Pre-treating the recovered cellulosic material;
c) Sanitizing and washing the pre-treated cellulosic material;
d)Drying the sanitized cellulosic material;
e)Optionally, mechanically processing the dried cellulosic material.

## Description

### Field of the invention

The present invention relates to a method for recycling cigarette filters and to the transformation thereof into a cellulosic material to be used as a filter in various fields of application, such as the production of respiratory masks.

### Description of the background art

It has been seen that cigarette butts are among the most numerous waste. Millions of cigarette butts are collected annually by volunteers, with the addition of those thrown directly into the garbage, collected by the responsible authorities, or dispersed in the environment and not recovered. The filters consist of cellulose fibers (cellulose acetate) which have a very slow biodegradability and also contain highly toxic residues (deriving from the tobacco smoke) which cause a high polluting load. Furthermore, the butts can be ingested by fish, birds, and other animals, which can suffocate or be damaged by the poison they contain.

Therefore, it is the object of the present invention to provide a method for recycling cigarette filters.

In particular, it is the object of the invention to recycle cigarette filters and transform them into a material which can be reused for the production of filtering material, even for sanitary or paramedical purposes.

Such an object is achieved by a method as defined in the appended claims, the definitions of which form an integral part of the present application for the purposes of sufficient description.

Further features and advantages of the invention will become apparent from the following description of preferred embodiments thereof, given by way of indicative and non-limiting examples.

### Brief description of the drawings

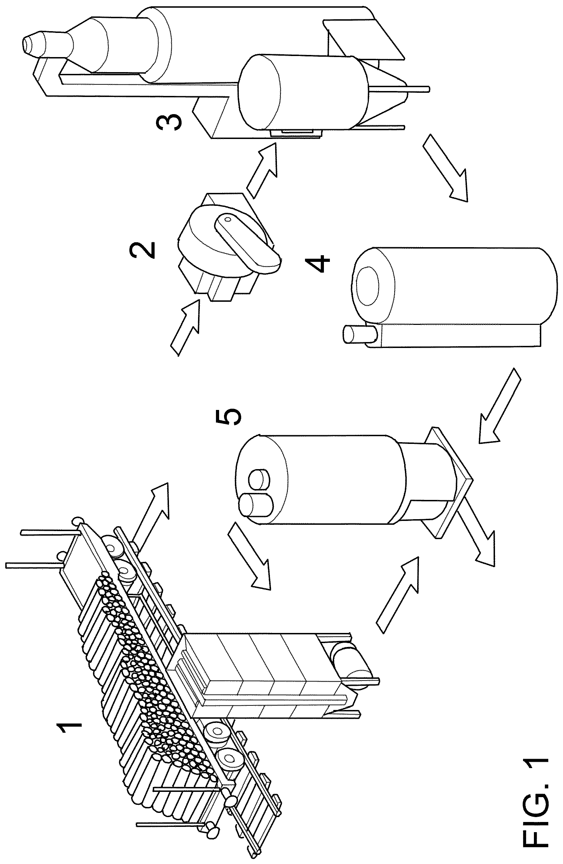

Figure 1 is a simplified perspective view of a plant for implementing the method of the invention.

### Description of the invention

The method according to the present invention comprises the following steps in sequence:
a) Crushing cigarette butts and separating and recovering the cellulosic material of the filters;
b) Pre-treating the recovered cellulosic material;
c) Sanitizing and washing the pre-treated cellulosic material;
d) Drying the sanitized cellulosic material;
e) Optionally, mechanically processing the dried cellulosic material.

Such a method can be carried out in a plant as shown in figure 1, comprising a transport and feeding system 1 (for example, a conveyor belt) of the cigarette butts to a shredder/separator 2. From such a shredder/separator 2, the cellulosic material of the filters thus separated is fed into a washing machine 3 for pre-treatment and from there into a sanitizing apparatus 4 and then into a dryer 5, from which the cellulosic material is taken and conducted to any subsequent processing.

The washing machine 3 is preferably provided with a heating system by means of heat exchangers.

The equipment used in such a plant is of the conventional type and will thus not be described in greater detail.

The recovered cellulosic material of step a) consists of or comprises cellulose acetate.

The pre-treating (or pre-washing) step b) is carried out at a temperature between 80°C and about 100°C in an aqueous pre-treatment mixture comprising (percentages by weight):

| | |
|---|---|
| - One or more anionic surfactants | ≤30% |
| - One or more non-ionic surfactants | ≤10% |
| - Water-soluble organic solvents | ≤5% |
| - Optionally, Anti-odor enzymes | ≤0.1% |
| - Optionally, an anti-redepositing agent | ≤2% |
| - Optionally, an optical brightener | ≤2%. |

In a preferred embodiment, the aqueous pre-treatment mixture comprises:

| | |
|---|---|
| - Benzenesulfonic acid | ≤20% or ≤15% |
| - Sodium lauryl sulfate | ≤5% |
| - Alcohol ethoxylates | ≤10% |
| - Sodium salts of fatty acids | ≤5% |
| - Glycerin/polypropylene glycol | <5% |
| - Optionally, mixture of Lipase, Amylase, Mannase, Pectinase and Proteinase | ≤0.1% |
| - Optionally, polypropylene terephthalate (anti-redepositing agent) | ≤2% |
| - Optionally, disodium distyrylbiphenyl disulfonate (optical brightener) | ≤2%. |

In particular, benzenesulfonic acid is identified by CAS number 85480-55-3, Sodium lauryl sulfate is identified by CAS number 68891-38-3, the alcohol ethoxylates are C12-C18 7EO alcohol ethoxylates and are identified by CAS number 68213-23-0, the sodium salts of fatty acids are sodium salts of C12-C18 fatty acids and are identified by CAS number 91032-12-1, disodium distyrylbiphenyl disulfonate is identified by CAS number 27344-48-1.

The pre-treating step b) is preferably carried out by gradually heating the aqueous suspension of the cellulosic material obtained from the cigarette filters up to the pre-treatment temperature. The total pre-treatment time is preferably less than 1 hour and more than 30 minutes.

The aqueous pre-treatment mixture is preferably used in amounts between 2 and 4 L, or 2.5 and 3.5 L, per 100 g of cellulosic material to be treated.

Preferably, the aqueous pre-treatment mixture comprises a silicone antifoam product, preferably based on polydimethylsiloxane (PDMS), to assist the washing and transport operations of the material through the plant and avoid mechanical breakages in the pumping mechanisms (cavitations) and water losses in the environment due to the possible formation of foam.

The sanitizing and washing step c) is preferably carried out at room temperature by treating the pre-treated cellulosic material with an aqueous sanitizing mixture comprising (percentages by weight):

| | |
|---|---|
| - Hydrogen peroxide | ≤15% or ≤10% |
| - Sodium carbonate | ≤30% |
| - Sodium carbonate peroxyhydrate | ≤30% |
| - Optionally, fatty alcohol ethoxylates | ≤5%. |

In particular, the hydrogen peroxide is identified by CAS number 124-43-6, the sodium carbonate is identified by CAS number 497-19-8, the sodium carbonate peroxyhydrate is identified by CAS number 15630-89- 4 and the fatty alcohol ethoxylates are preferably 1-2.5EO polyglycol ethers.

The aqueous sanitizing mixture can also comprise various types of perfumes or odor inhibitors.

The aqueous sanitizing mixture is preferably used in amounts between 2 and 4 L, or 2.5 and 3.5 L, per 100 g of cellulosic material to be treated.

The treatment times are generally between 20 minutes and 2 hours.

Step c) can also comprise a final rinse, which is useful to recover any unreacted chemical compounds and remove process traces from the finished product.

The drying step d) can be carried out by heating through blowers or "fluid beds," or at an industrial level by means of squeezing augers or centrifuges (for example, vertical centrifuges) to remove the majority of the fluid before heat drying.

Step e) of mechanically processing the cellulosic material thus obtained can comprise conventional processes of the textile industry, for example a carding step and possibly a subsequent step of depositing the carded material to form overlapping layers and needling or hydro-entangling of the overlapping layers.

The cellulosic material thus obtained can be used as a filling or padding material for various types of filtering elements for domestic or industrial use, in particular in the production of sanitary or industrial masks.

The method of the present invention allows to recover a highly polluting waste product such as cigarette butts and to transform it into a material of a purity and texture such as to preserve the functionality of the original material, i.e., the ability to act as a filter.

In order to meet contingent and specific needs, those skilled in the art may obviously make further changes and variations to the present invention, all contained in the scope of protection of the invention, as defined by the following claims.

## Claims

1. A method for recycling cigarette filters, comprising the following steps in sequence:
a) Crushing cigarette butts and separating and recovering the cellulosic material of the filters;
b) Pre-treating the recovered cellulosic material;
c) Sanitizing and washing the pre-treated cellulosic material;
d) Drying the sanitized cellulosic material;
e) Optionally, mechanically processing the dried cellulosic material.

2. The method according to claim 1, wherein the recovered cellulosic material of step a) consists of or comprises cellulose acetate.

3. The method according to claim 1 or 2, wherein the pre-treating step b) is carried out at a temperature between 80°C and about 100°C in an aqueous pre-treatment mixture comprising (percentages by weight):
| | |
|---|---|
| - One or more anionic surfactants | ≤30% |
| - One or more non-ionic surfactants | ≤10% |
| - Water-soluble organic solvents | ≤5% |
| - Optionally, anti-odor enzymes | ≤ 0.1% |
| - Optionally, an anti-redepositing agent | ≤2% |
| - Optionally, an optical brightener | ≤2%. |

4. The method according to claim 3, wherein the aqueous pre-treatment mixture comprises:
| | |
|---|---|
| - Benzenesulfonic acid | ≤20% or ≤15% |
| - Sodium lauryl sulfate | ≤5% |
| - Alcohol ethoxylates | ≤10% |
| - Sodium salts of fatty acids | ≤5% |
| - Glycerin/polypropylene glycol | ≤5% |
| - Optionally, mixture of Lipase, Amylase, Mannase, Pectinase and Proteinase | ≤0.1% |
| - Optionally, polypropylene terephthalate as an anti-redepositing agent | ≤2% |
| - Optionally, disodium distyrylbiphenyl disulfonate as an optical brightener | ≤2%. |

5. The method according to claim 4, wherein the alcohol ethoxylates are C12-C18 7EO alcohol ethoxylates and/or the sodium salts of fatty acids are sodium salts of C12-C18 fatty acids.

6. The method according to any one of claims 1 to 5, wherein in step b) the total pre-treatment time is less than 1 hour and more than 30 minutes.

7. The method according to any one of claims 3 to 6, wherein the aqueous pre-treatment mixture is used in amounts between 2 and 4 L, or 2.5 and 3.5 L, per 100 g of cellulosic material to be treated.

8. The method according to any one of claims 3 to 7, wherein the aqueous pre-treatment mixture comprises a silicone antifoam product, preferably based on polydimethylsiloxane (PDMS).

9. The method according to any one of claims 1 to 8, wherein the sanitizing and washing step c) is carried out at room temperature by treating the pre-treated cellulosic material with an aqueous sanitizing mixture comprising (percentages by weight):
| | |
|---|---|
| - Hydrogen peroxide | ≤15% or ≤10% |
| - Sodium carbonate | ≤30% |
| - Sodium carbonate peroxyhydrate | ≤30% |
| - Optionally, fatty alcohol ethoxylates | ^{<}5%. |

10. The method according to claim 9, wherein the fatty alcohol ethoxylates are 1-2.5EO polyglycol ethers.

11. The method according to claim 9 or 10, wherein the aqueous sanitizing mixture comprises perfumes or odor inhibitors.

12. The method according to any one of claims 9 to 11, wherein the aqueous sanitizing mixture is used in amounts between 2 and 4 L, or 2.5 and 3.5 L, per 100 g of cellulosic material to be treated.

13. The method according to any one of claims 9 to 12, wherein step c) comprises a final rinse.

14. The method according to any one of claims 1 to 13, wherein:
- The drying step d) can be carried out by heating through blowers or "fluid beds," or at an industrial level by means of squeezing augers or centrifuges and/or
- step e) of mechanically processing the cellulosic material comprises a carding step and possibly a subsequent step of depositing the carded material to form overlapping layers and needling or hydro-entangling the overlapping layers.

15. Use of the material which is obtainable by the method according to any one of claims 1 to 14 as a filling or padding material for various types of filtering elements for domestic or industrial use, or in the production of sanitary or industrial masks.
